# EUROPÄISCHE PATENTANMELDUNG

(11) **EP 0 569 914 A1**
(43) Veröffentlichungstag der Anmeldung: **18.11.1993**
(21) Anmeldenummer: 93107587.3
(22) Anmeldetag: 10.05.1993
(51) Int. Cl.: B64F 5/00, B66F 3/46

(54) **Vorrichtung zum Hochbocken von Flugzeugen**

(30) Priorität: 14.05.1992 DE 4215644
(71) Anmelder: GRESCHBACH INDUSTRIE GmbH & CO KG, W-7834 Herbolzheim/Breisgau (DE)
(72) Erfinder: Stegelmann, Heinz, 4330 Mülheim a. d. Ruhr 13 (DE)
(74) Vertreter: Fitzner, Ulrich, Dr.

(57) **Zusammenfassung**

Die vorliegende Erfindung betrifft eine Vorrichtung zum last- und temperaturunabhängigen sowie positionsgenauen Hochbocken vorzugsweise von Flugzeugen unter Einhaltung einer vorgegebenen waagerechten oder geneigten Lage im Gleichlauf auf eine beliebig bestimmbare Höhe mittels vertikal stehender Hydraulikzylinder (42), die zusammen mit dem Hebergestell (15) die Hubelemente (31-33) bilden und insbesondere unter den Tragflächen (38) und dem Bug (39) des Flugzeuges ansetzbar sind, wobei a) an den Hubelementen (31-33) eine Vorrichtung (35,36) zur Messung der Hubhöhe angeordnet ist, b) an der Vorrichtung (35,36) ein Meßwertgeber (9) angeordnet ist, mittels dessen die Länge des Hubweges wiedergegeben wird, und c) die Vorrichtung (35,36) mit einer last- und temperaturunabhängigen, im automatischen Betrieb auf eine bestimmte Hubhöhe (41) sowie Hebe- und Senkgeschwindigkeit programmierbaren Steuereinheit (40) verbunden ist, an die die von dem Meßwertgeber (9) gegebenen Ist-Werte geleitet werden.

## Beschreibung

Die vorliegende Erfindung betrifft eine neuartige Vorrichtung zum Hochbocken von Flugzeugen.

Nach dem Stand der Technik werden Flugzeuge durch einen Hebesatz, bestehend aus mehreren Hebern, auf unterschiedliche Höhen zu Wartungs- und Reparaturarbeiten angehoben.

Hierfür können beispielsweise Dreibockheber eingesetzt werden, wie sie in der DE-OS 3816381, der EP 0341579 und dem deutschem Gebrauchsmuster 8806335.6 beschrieben sind. Die Heber sind entsprechend ihrem Einsatzgebiet mit ein- und mehrstufigen, einfach wirkenden Hydraulikzylindern versehen, deren einzelne Stufen ein Außengewinde zur Aufnahme einer Sicherheitsmutter (Absturzsicherung) haben. Diese Sicherheitsmuttern können von Hand, hydraulisch, elektrisch oder pneumatisch nachgeführt werden.

Bisher erfolgte die Bedienung der Heber zur Anhebung von Flugzeugen manuell, durch Zentralsteuerung ungeregelt oder durch lagegeregelte Steuerung. Bevor ein Flugzeug angehoben werden kann, bedarf es immer einer Adaptierung zwischen Heber und Flugzeug. Diese erfolgt bei allen Bedienungen manuell vom jeweiligen Heber aus.

Bei der manuell gesteuerten Anhebung von Flugzeugen erfolgt die Bedienung von dem Heber aus. Dies bedeutet, daß zum Bedienen für jeden Heber eine Person benötigt wird. Die Bedienung der Sicherheitsmuttern bleibt grundsätzlich außer Betracht, da die Nachführung bei jeder Ausführung sowohl von Hand als auch automatisch erfolgen kann. Eine weitere Person wird zur Kontrolle der Nivelliereinrichtung im Flugzeug benötigt. Diese Person gibt Anweisung (über Funk) an die einzelnen Bediener der Heber, damit beim Heben und Senken ein angenäherter Gleichlauf erreicht wird. Der Personal- und Zeitaufwand ist hierbei erheblich. Außerdem wird weder eine ausreichende Genauigkeit bezüglich der gleichmäßigen Anhebung des Flugzeuges erreicht, noch ist es möglich, auf eine bestimmte Höhe zu fahren, ohne daß ein zusätzlicher Meßaufwand betrieben werden muß. Bei der Anhebung von Flugzeugen mittels ungeregelter Zentralsteuerung wird die Bedienungsfunktion nach der Adaptierung von den einzelnen Hebern auf ein Steuerzentralpult übertragen und die Bedienung der einzelnen Heber erfolgt durch eine Person manuell vom Steuerpult aus. Diese Ausführung bringt zwar Personalersparnis, doch keine Reduzierung des Zeitaufwandes für das Heben ud Senken. Auch läßt sich ein exakter Gleichlauf beim Anheben und Senken des Flugzeuges nicht erreichen.

Aus der DE-OS 3713007 und den, deutschen Gebrauchsmuster 8708513.5 ist eine Vorrichtung bekannt, bei welcher in dem Flugzeug bzw. am Flugzeug ein sogenannter Lagegeber befestigt ist. Dieser wertet die Längs- und Querachse des Flugzeuges aus. Die Steuerverbindung zwischen Lagegeber und Heber erfolgt über Kabel oder drahtlos über Funk.

Bei dieser Vorrichtung wird somit die Längs- und Querachse des Flugzeuges als Ist-Wert-Geber ausgewertet. Ein am Flugzeug angebrachter Lagegeber, der zur Einhaltung einer vorgebbaren Lage des Flugzeuges während des Anhebens und Absenkens mit den Hubelementen in Verbindung steht, dient als Ist-Wert-Geber. Bei Abweichungen von der vorgegebenen Soll-Lage werden die Hubelemente entsprechend unterschiedlich angesteuert, bis sich wieder die Soll-Lage einstellt. Dadurch soll während des Anhebens und Absenkens des Flugzeuges sowohl die Langsneigung als auch die Querneigung des Flugzeuges überwacht und ausgeregelt werden.

In der deutschen Offenlegungsschrift 3713007 werden spezielle Lagegeber vorgestellt, z.B. mögliche Ausführungsformen eines in einem Kugelgelenk oder dergleich gelagerten Pendels. Eine Messung und Steuerung der Hubhöhe ist mit einem solchen Sytem nicht möglich. Vielmehr ist die Steuerung allein auf das Einhalten der waagerechten Lage ausgerichtet. Ein Anheben von Flugzeugen in einer vorgegebenen geneigten Lage ist demzufolge mit diesem System nicht möglich.

Weiterer Nachteil dieser Vorrichtung ist, daß in Folge des Totzeitverhaltens der als Lagegeber verwendeten Pendel ein absoluter Gleichlauf der verschiedenen Hubelemente sich nicht erreichen läßt. Ein Anheben des Flugzeuges im automatischen Betrieb wird sich daher ebenfalls mit einer großen Regelabweichung ereichen lassen.

Aus dem Gebrauchsmuster 9111732.1 ist eine weitere Nivelliervorrichtung bekannt. Hier wird die Regelung mittels einer mechanischen Pendelanordnung erreicht. Es handelt sich dabei um zwei um 90 o versetzt schwingend angeordneter Einzelpendel, welche über ein Potentiometer die entsprechenden Ist-Werte an die Regeleinrichtung weitergeben.

Die beschriebenen Regeleinrichtungen zur Einhaltung der waagerechten Lage des Flugzeuges beim Hochbocken haben erhebliche Nachteile. Insbesondere kann der Regelvorgang erst dann einsetzen, wenn die Störgröße sich bereits auf den Prozeß ausgewirkt hat. Damit verbunden ist die Gefahr, daß Instabilitäten im Regelsystem auftreten können. Derartige Folgen lassen sich nur durch meh oder weniger aufwendige Systeme, z.B. Störgrößenaufschaltung oder kombinierte Regelsysteme ausgleichen. Ganz lassen sich die erwähnten Nachteile auch so nicht ausschalten.

Ein weiteres Regelsystem für das Anheben mittels Hebelementen ist aus der DE-Z.: Messen, Steuern, Regeln, Beilage ''Automatisierungspraxis'' 1964, Heft 2 bis 4, Seiten 20 bis 43 bekannt.

Die Wegmessung an den Zylindern erfolgt hier mit Hilfe von sogenannten Drehmeldern, die durch Seile oder Ketten in Abhängigkeit vom zurückgelegten Zylinderweg gedreht werden. Hierbei wird einer der Hubzylinder als Leitzylinder ausgelegt. An seiner Wegabwicklung ist je ein Geber-Drehmelder als Wegvergleichnormale für die drei Nebenzylinder angeschlossen. An diesen geben zugeordnete Ist-Wert-Drehmelder der Stellung dieser Zylinder entsprechende Winkelsignale.

Demgemäß erfolgt die Messung nicht durch Ermittlung der absoluten Hubhöhe. Vielmehr ist das eigentliche Steuersignal die Abweichung der Winkellage der Differential-Empfänger. Wird der Zylinder gegenüber dem Leitzylinder somit verschoben, so äußert sich das in einer Winkeldrehung zwischen, dem zugeordneten Geber-Drehmelder. Der zugehörige Differential-Empfänger nimmt eine Winkellage ein, die so weit von der neutralen Lage entfernt ist, wie die Winkelsummendifferenz zwischen dem zugeordneten Geber beträgt.

Im Grunde stellt dieses System keine Steuerung über die Hubhöhe, sondern über die Ausbalancierung der waagerechten Lage des angehobenen Gegenstandes dar.

Das System ist nicht für das Anheben von Flugzeugen mittels Teleskopzylindern verwendbar. Es mag beim gleichmäßigen Anheben von waagerechten Platten funktionieren. Schon ein Hubvorgang mit geneigt gestellten Platten dürfte nicht mehr möglich sein. Hinzu kommt, daß an den Flugzeugen aufwendige Vorrichtungen angeordnet werden müßten, um die Ist-Wert-Drehmelder sowie die Differential-Empfänger anzubringen.

Die vorliegende Erfindung hat sich nunmehr die Aufgabe gestellt, eine Vorrichtung zum last- und temperaturunabhängigen sowie positionsgenauen Hochbocken vorzugsweise von Flugzeugen unter Einhaltung einer vorgegebenen waagerechten oder geneigten Lage im Gleichlauf auf eine beliebig bestimmbare Höhe mittels vertikal stehender Hydraulikzylinder, die zusammen mit dem Hebergestell die Hubelemente bilden und insbesondere unter den Tragflächen und dem Bug des Flugzeuges ansetzbar sind, zur Verfügung zu stellen.

Hieraus ergibt sich, daß Zweck der vorliegenden Erfindung ein Anheben der Flugzeuge auf eine vorgegebene Hubhöhe unter Einhaltung der Lage des Flugzeuges ist. Demgemäß ist es erfindungsgemäß möglich, das Flugzeug nicht nur waagerecht, sondern auch in einer vorgegebenen geneigten Lage anzuheben. Weiterer Zweck der vorliegenden Erfindung ist, daß das Anheben im exakten Gleichlauf geschieht und ein positionsgenaues Heben auf die jeweils gewünschte Höhe möglich ist.

Diese Aufgabe wird dadurch gelöst, daß a) an den Hubelementen eine Vorrichtung zur Messung der Hubhöhe angeordnet ist, b) an der Vorrichtung ein Meßwertgeber angeordnet ist, mittels dessen die Länge des Hubweges wiedergegeben wird, und c) die Vorrichtung mit einer last- und temperaturunabhängigen, im automatischen Betrieb auf eine bestimmte Hubhöhe sowie Hebe- und Senkgeschwindigkeit programmierbaren Steuereinheit verbunden ist, an die die von dem Meßwertgeber gegebenen Ist-Werte geleitet werden.

Erfindungsgemäß werden demgemäß zur Lösung der Aufgabenstellung eine Höhenmeßvorrichtung, eine Hydrauliksteuerung, eine Elektroniksteuerung sowie ein Nivelliersytem mit entsprechender Schnittstelle eingesetzt.

Die einzelnen Hubelemente können beliebig ausgestaltet werden. Vorteilhafterweise kommen Dreibockheber zum Einsatz. Diese bestehen aus einem Hebegestell, in welchem mittig, vertikal stehend, ein ein- oder mehrstufiger Hydraulikzylinder angeordnet ist. Dieser ist im oberen Bereich von drei winkelsymmetrisch zueinander angeordneten Stützen und im unteren Bereich an mit einer Zentralplatte verbundenen Abstützvorrichtung lagefixiert.

Die einzelnen Heber sind schaltungstechnisch so aufgebaut, daß sie mit Einzel- und Zentralbedienung ausgestattet sind. Wird ein Heber mit dem Stecker des Zentralsteuerungskabels adaptiert, wird die Einzelbedienung außer Funktion gesetzt.

Erfindungswesentlich ist, daß für den Hub- und Senkvorgang ein Neigungsystem nicht mehr benötigt wird, da die Steuerung dieses Vorgangs allein mit Hilfe der von der speziellen Höhenmeßvorrichtung ermittelten Ist-Werte erfolgt. Aus diesem Grunde ist es auch möglich, das Flugzeug in einer vorgegebenen Schieflage anzuheben. Die herkömmlichen Anlagen, welche auf der Messung des Neigungswinkels basieren, sind hierfür nicht geeignet.

Eine Nivellierung des Flugzeuges in eine waagerechte oder ggf. auch geneigte Lage erfolgt lediglich vor Beginn des Hebe- und Senkvorgangs. Die einzelnen Heber werden mittels Einzelbedienung nacheinander unter den Flugzeugadaptionspunkten ausgefahren. Der Adaptionspunkt des Hebers wird mit dem Adaptionspunkt des Flugzeuges zur Anlage gebracht. Danach werden die Heber über die hydraulischen Räder nivelliert.

Ist dies erfolgt, werden die Fußplatten der Heber über die Gewindespindeln bis auf den Boden gefahren, so daß diese am Boden zur Anlage kommen. Ein handeslübliches Neigungssystem wird in dem Flugzeug in der Nähe des bordeigenen Nivellierungsystems angebracht und mit diesem abgeglichen. Das Kabel des Neigungssystems wird am zentralen Schaltpult angeschlossen.

Dieser Vorgang ist insbesondere dann wichtig, wenn die Folge von Geländeunebenheiten nicht immer eine absolut waagerechte Ausgangslage des Flugzeugs gewährleistet ist. Erst nachdem die Nivellierung in der geschilderten Weise durchgeführt ist, kommt die erfindungsgemäße Vorrichtung zum Einsatz.

Wichtig ist, daß die Höhenmessvorrichtung an den Hubelementen angeordnet ist. Weiterhin ist die Meßvorrichtung in spezieller Weise ausgeführt. Sie bestehen nämlich aus einem bandförmigen Element, das eine Auf-/Abwickelwelle mit einer Verdrehsicherung verbindet, welche ihrerseits mit der Kolbenstange des Hydraulikzylinders des Hubelementes derart verbunden ist, daß sie in Abhängigkeit von dessen Bewegung vertikal bewegbar ist. Zu diesem Zweck ist die Verdrehsicherung in einem speziellen Führungselement gelagert. Hierbei kann es sich beispielsweise um einen Hohlzylinder handeln. Denkbar sind aber auch andere Elemente, z.B. Führungsschienen.

Das bandförmige Element wird von der Auf-/Abwickelwelle zur Verdrehsicherung formschlüssig über ein Übertragungselement geführt. Am Übertragungselement ist das Wegmeßsystem, vorzugsweise ein Absolutwertgeber, angebracht. Mittels einer speziellen Feder oder eines Momentenmotors läßt sich das bandförmige Element spannen.

Beim Anheben der Kolbenstange des Hydraulikzylinders wird die Verdrehsicherung mitgenommen. Zugleich wird das an der Verdrehsicherung befestigte Ende des bandförmigen Elementes mitgenommen, so daß es sich allmählich von der Auf-/Abwickelwelle abwickelt. Die Länge des Bandes gibt mittels des Meßwertgebers schließlich die Hubhöhe wieder.

Der für die exakte Messung erforderliche Bandzug des bandförmigen Elementes wird mittels einer Feder aufgebracht. Die Höhenmeßvorrichtung ist schließlich in einem speziellen Gehäuse untergebracht. Die Meßvorrichtung mit dem Gehäuse ist insgesamt so ausgestaltet, daß unabhängig von der Abstützlage der Fußplatten der Hebevorrichtung durch Aufsetzen des Gehäuses auf den Boden die jeweilige Höhe gemessen wird.

Als bandförmiges Element können beliebige Einrichtungen verwendet werden. Vorzugsweise kommen Zahnriemen oder Ketten zum Einsatz.

Die genaue Bandzuglänge zum Zylinderhub in Verbindung mit dem Absolutwertgeber, bestimmen die Genauigkeit der Gleichlauf- und Positioniersteuerung.

Da alle bandförmigen Elemente eine Längenänderung (durch Temperatur, Zugkraftänderung, Bandlänge, usw.) haben, muß diese Längenänderung (z.B. haben Zahnriemen eine Längendehnung von 0,1 bis 0,25 % pro Meter auf eine bestimmte Zugkraft bezogen) elimentiert werden. Dies erfolgt bei vorgenannter Erfindung durch Änderung des Momentenverlaufes 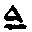 Zugkraftänderung und Kompensation der Längendehnung am Spannelement (Motor) in Verbindung mit fest programmierbaren Kompensationswerten in der Steuerung.

Dadurch, daß über die Verdrehsicherung das bandförmige Element direkt mit dem beweglichen Hydraulikzylinder gekoppelt ist, läßt sich eine Höhenmessung erreichen. Bei einer reinen Messung der Hubhöhe wird die Kennlinie des Momentenmotors beispielsweise so festgelegt, daß die Längsdehnung, z.B. des Zahnriemens, elimentiert wird. Durch eine derartige Einrichtung läßt sich die exakte Höhe der Flugzeuganhebung vom Boden genau feststellen.

Die Vorrichtung zur Messung der Hubhöhe dient erfindungsgemäß als Ist-Wertgeber für die Steuerungs- und Regelung des Hebevorgangs. Hierfür genügt ein Momentenmotor mit einem konstanten Moment, da die Längsdehnung hierbei in die Steuerung fest einprogrammiert werden kann. Die gewünschte Höhe wird am Zentralsteuerpult entweder flugzeugbezogen (fest Programmierte Soll-Höhen) oder wartungs- bzw. reparaturbezogen (Werkstattausbau, Triebwerksausbau usw.) digital vorgewählt bzw. über einen Dekatenschalter eingegeben.

Die Hub- und Senkgeschwindigkeit ist last- und temperaturunabhängig und im automatischen Betrieb für eine bestimmte Geschwindigkeit fest programmiert, Weiterhin besteht die Möglichkeit, die Geschwindigkeit beim Heben und Senken stufenlos über einen Fahrschalter entsprechend der Fahrschalterstellung zu fahren. Bei Mittenzentrierung ist die Geschwindigkeit O, die Maximalgeschwindigkeit wird bei maximaler Auslenkung erreicht.

Der Vorteil der vorliegenden Erfindung ist darin zu sehen, daß die aus dem Stand der Technik bekannten Nachteile der Regelsysteme nicht mehr auftreten, denn es handelt sich hier um eine reine Steuerung. Das waagerechte Anheben des Flugzeuges ist nicht mehr von der Messung der waagerechten Lage abhängig. Vielmehr wird eine bestimmte Hubgeschwindigkeit und Hubhöhe über ein Steuerpult vorgegeben. Es wird also eine Steueranlage eingesetzt, welche nicht nur weniger aufwendig als herkömmliche Regeleinrichtungen ist, sondern auch nicht mehr die Probleme der Instabilitäten aufwirft.

Durch die genannten Einzelelemente ist es erfindungsgemäß möglich, die Vorrichtung zum Hochbocken unabhängig von Geländeunebenheiten einzusetzen. Durch die Verwendung der neuartigen Höhenmeßvorrichtung als Ist-Wert-Geber für die Steuer- und Regeleinrichtungen ist es überraschenderweise möglich, mehrstufige Hydraulikzylinder unterschiedlicher Größe unabhängig von etwaigen Neigungen des Geländes im Gleichlauf zu fahren und dabei stets die vorgegebene Lage (waagerecht oder geneigt) des Flugzeuges einzuhalten. Insbesondere wird eine bisher nicht gekannte Genauigkeit erreicht. Diese liegt nämlich im Bereich von weniger als 3 mm.

Weiterhin ist es überraschenderweise möglich, last- und temperaturunabhängig einen Gleichlauf von drei oder mehr Hebern, insbesondere von mehrstufigen, einfachwirkenden Teleskopzylindern zu erreichen. Durch das Bandzugkonzept lassen sich außerdem alle Störgrößen, insbesondere der Übertragungselemente (Zahnfehler, Teilungsfehler, Längenänderung durch Dehnung usw.), eliminieren.

Im folgenden wird die Erfindung unter Bezugnahme auf die Figuren näher erläutert. Hierbei wird in den einzelnen Figuren folgendes dargestellt:
- Figur 1:: Gesamtansicht der erfindungsgemäßen Vorrichtung
- Figur 2:: Dreibockheber in der Seitenansicht mit Meßvorrichtung in Ruhestellung
- Figur 3:: Dreibockheber in justierter Stellung

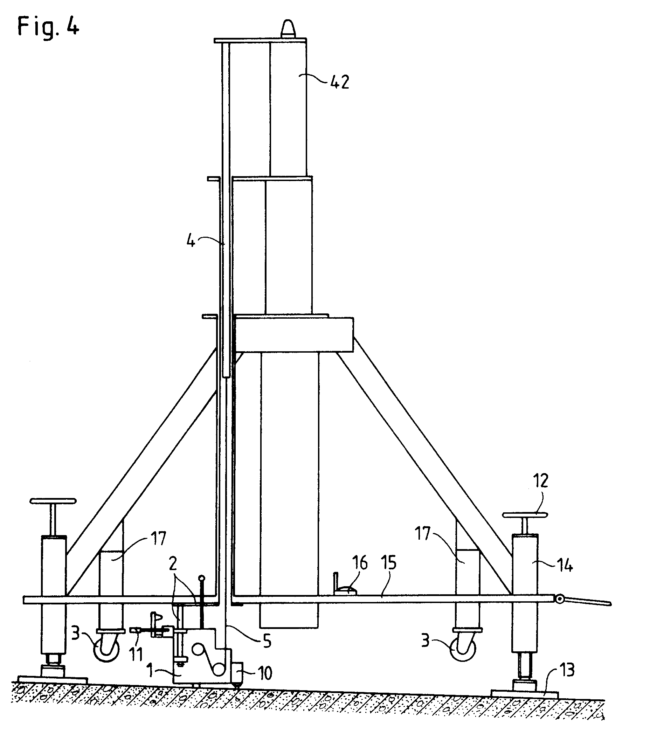

- Figur 4:: Dreibockheber mit ausgefahrenen Hydraulikzylindern
- Figur 5:: Aufwickelwelle der Meßvorrichtung
- Figur 6:: Übergangselement der Vorrichtung zur Messung der Hubhöhe
- Figur 7:: Hydraulikzylinder mit Sicherheitsmutter
Zum Hochbocken des Flugzeuges werden erfindungsgemäß die Hubelemente 31-33 unter den Bug 39 bzw. die Flügel 38 des Flugzeuges geschoben. Die Hubelemente werden zunächst in Einzelbedienung ausgefahren und genau am Adapter des Flugzeuges adaptiert.

Die Dreibockheber haben drei Arbeitsstellungen:

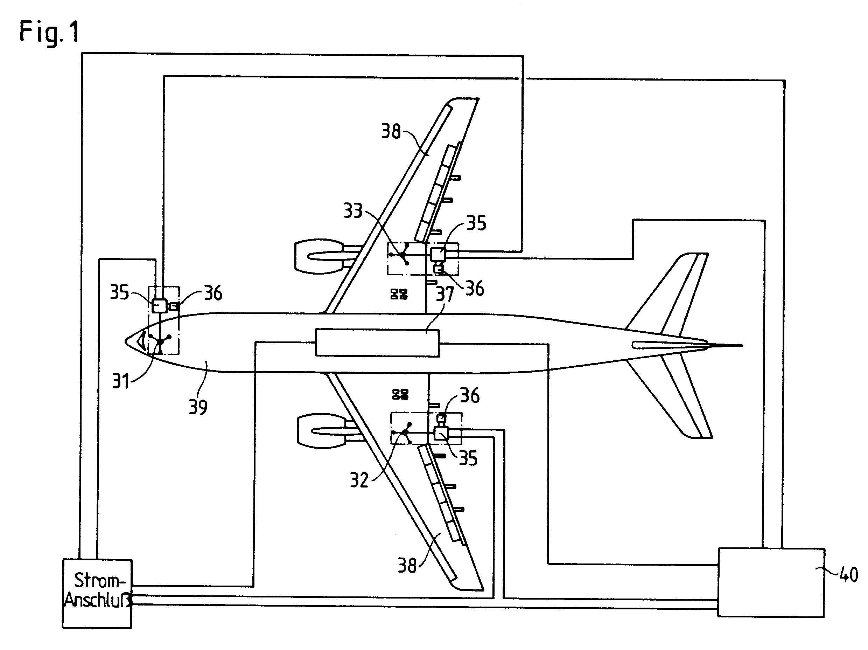

- Figur 1 -: Verfahrstellung, Verfahren
Der Heber hat zum Verfahren drei Räder 3 Die Räder 3 sind über Hydraulikzylinder 17 und das Gestell 15 mit dem Hydraulikzylinder 42 verbunden. In Fahrstellung liegen die Fußplatten 13 und das Gehäuse 1 eingezogen in Endstellung.

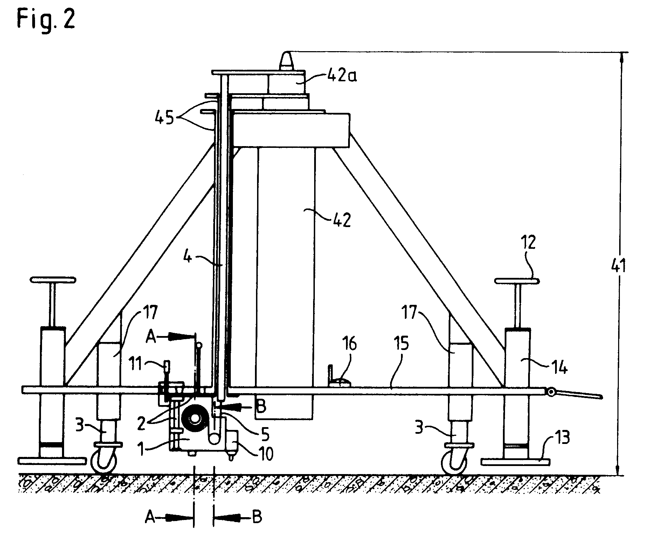

- Figur 2 -: Adaptieren, Nivellieren
Die Nivellierung des Dreibockhebers erfolgt durch den Hydraulikzylinder 17 über die Räder 3 und wird an der Libelle 16 abgelesen.

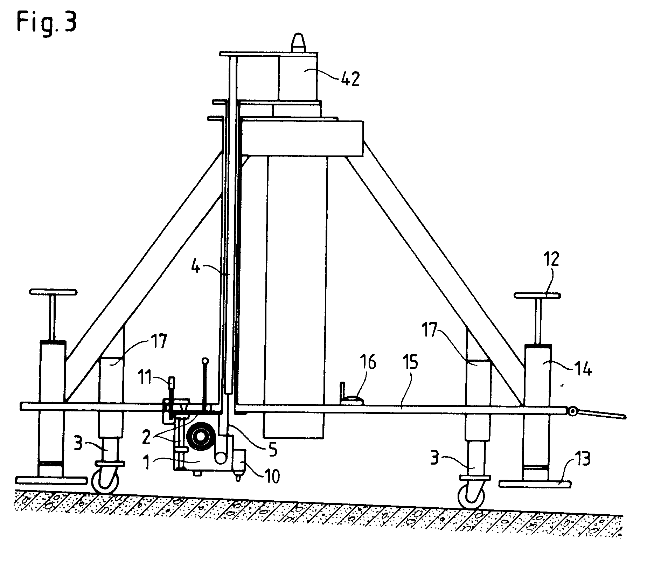

- Figur 3 -: Abstützen, Heben und Senken
Ist die Nivellierung abgeschlossen, so werden die Fußplatten 13 durch die Handräder 12 auf den Boden gefahren. Der Heber ist nur noch durch die Ständer 14 abgestützt. Nach Ablassen und Aufsetzen des Gehäuses 1 mit der Vorrichtung 35,36 zur Messung der Hubhöhe 41 auf den Boden ist der Dreibockheber betriebsbereit. Unabhängig von der nivellierten Höhe wird immer die tatsächliche Höhe gemessen. Von dieser Ist-Höhe aus kann immer die Soll-Höhe manuell oder automatisch angefahren werden.

Die Vorrichtung 36 liefert während des Anhebens des Flugzeuges immer die exakte Höhe 41. Die Meßvorrichtung besteht aus dem bandförmigen Element 5, das die Auf-/Abwickelwelle 7 mit der Verdrehsicherung 4 verbindet, welche ihrerseits mit der Kolbenstange 42a des Hydraulikzylinders 42 des Hubelements derart verbunden ist daß sie in Abhängigkeit von dessen Bewegung vertikal bewegbar ist. Zu diesem Zweck ist die Verdrehsicherung 4 in dem Führungselement 45 gelagert. Hierbei kann es sich beispielsweise um einen Hohlzylinder handeln. Denkbar sind aber auch andere Elemente, z.B. Führungsschienen.

Beim Anheben der Kolbenstange 42a des Hydraulikzylinders 42 wird die Verdrehsicherung 4 mitgenommen. Zugleich wird das an der Verdrehsicherung 4 befestigte Element des bandförmigen Elementes 5 mitgenommen, so daß es sich allmählich von der von Auf-/Abwickelwelle 7 abwickelt. Die Länge des Bandes gibt mittels des an dem Übertragungselement 6 drehsteif angeordneten Meßwertgebers 9 schließlich die Hubhöhe 41 wieder. Der für die exakte Messung erforderliche Bandzug des bandförmigen Elementes 5 wird mittels der Feder 8 aufgebracht. Das bandförmige Element 5 wird von der Auf-/Abwickelwelle 7 formschlüssig über das Übertragungselement 6 geführt. Zusammen mit der Feder 8 bewirkt dies die notwendige Spannung des bandförmigen Elements 5.

Die Höhenmessvorrichtung ist in dem Gehäuse 1 untergebracht. Die Meßvorrichtung 35,36 mit dem Gehäuse 1 ist insgesamt so ausgestattet, daß unabhängig von der Abstützlage der Fußplatten 13 der Hebevorrichtung durch Aufsetzen des Gehäuses 1 auf den Boden die jeweilige Höhe 41 gemessen wird.

Zur Messung wird die Spanneinrichtung 8 eingeschaltet. Hierbei kann es sich entweder um einen Elektro- Hydraulik- oder Pneumatikmotor handeln. Als Spanneinrichtung kann auch ein Federelement verwendet werden. Für eine genaue Messung und Regelung besteht die Möglichkeit, die Längendehnung des bandförmigen Elementes 5 zur Anpassung des Bandzugdrehmomentes zu eliminieren. Außerdem läßt sich das Gehäuse 1 mittels des Spannhebels 11 in einer vorgegebenen Lage fixieren.

Mittels der Vorrichtung 36 läßt sich erfindungsgemäß die Hubhöhe vorprogrammieren, so daß bei der gewünschten Höhe der Hydraulikzylinder aufhört zu arbeiten. Die Programmierung und Steuerung wird mittels des zentralen Steuerpultes 40 durchgeführt.

In der gewünschten Zielposition wird erfindungsgemäß die Kolbenstange 42a mit Hilfe der Sicherheitsmuttern 48 gesichert.

Tritt an einem Hydraulikzylinder ein Leck auf, wird das Flugzeug mit Hilfe der Sicherheitsmutter in der vorgegebenen Lage gehalten.

Erfindungsgemäß werden ein- oder mehrstufige sowie einfach oder doppelt wirkende Hydraulikzylinder eingesetzt.

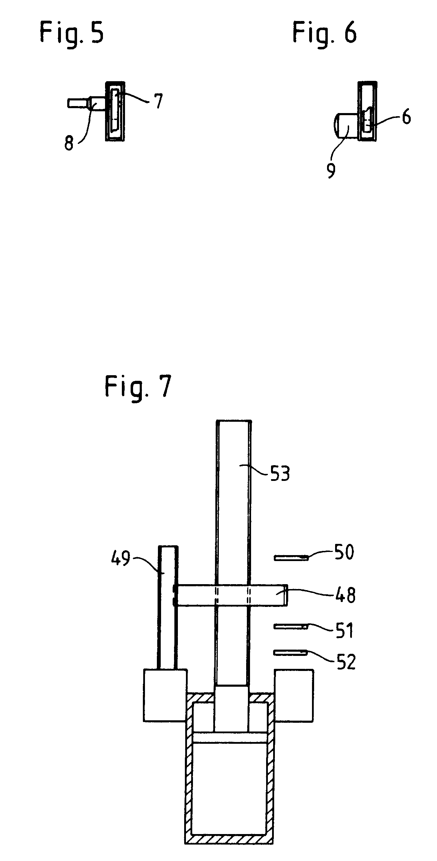

In Figur 7 ist ein einstufiger Teleskopzylinder dargestellt. An diesem ist eine Sicherheitsmutter 48 vorgesehen, welche unbeabsichtigtes Absenken des Flugzeuges verhindern soll. Die Sicherheitsmutter 48 wird getrennt mit einem elektrischen Antrieb 49 auf- und abgefahren.

Fährt die Kolbenstange 53 aufwärts, wird auch die Sicherheitsmutter 48 passiv nach oben mitgenommen. Erreicht sie beim Heben den oberen Endschalter 50, wird die Mutter aktivmotorisch nach unten gefahren, so daß sich eine Relativbewegung nach unten ergibt. Erreicht sie hierbei den unteren Endschalter 51, wird die Mutter 48 gestoppt, so daß sie wieder passiv die Geschwindigkeit der Kolbenstange 53 annimmt.

Dieser Vorgang wiederholt sich so oft, bis die Kolbenstange 53 stehen bleibt. Dann wird die Mutter 48 nach einiger Zeit wieder aktiv auf dem unteren Endschalter 51 anhalten. Erst jetzt ist der Hubvorgang beendet.

Sinkt nun die Kolbenstange 53 durch ein Leck ab, wird die Sicherheitsmutter 48 den Endschalter 51 verlassen und aufsitzen, so daß ein weiteres Absinken nicht mehr möglich ist. Hierbei wird der Endschalter 52 geschaltet.

Soll später die Kolbenstange hydraulisch abgesenkt werden, so muß, sofern der Endschalter 52 geschaltet ist, die Kolbenstange 53 so lange nach oben gefahren werden, bis sich die Mutter 48 passiv wieder zwischen den beiden Endschaltern 51 und 50 befindet.

Verläßt die Mutter 48 den Endschalter 51 bei dieser kurzen Aufwärtsfahrt, muß sie aktivmotorisch verstellt werden, so daß sie bei gleichzeitiger Abwärtsbewegung der Kolbenstange 53 den oberen Endschalter 50 erreichen kann. Dort stoppt sie wieder und wird mit der Kolbenstange 50 so lange passiv nach unten gefahren, bis sie nochmals auf den unteren Endschalter 51 kommt. Dieser Vorgang wird wiederholt, bis die Kolbenstange 53 anhält. Der Senkvorgang ist erst abgeschlossen, wenn die Mutter aktiv den unteren Endschalter 51 erreicht hat.

Mit der erfindungsgemäßen Vorrichtung ist es überraschend möglich, bisher nicht bekannte Lösungen von Nachteilen des Standes der Technik zu erreichen. Dies wird mit überraschend geringem Aufwand bewerkstelligt.

Insbesondere läßt sich mit der vorliegenden Erfindung ein weitgehend last- und temperaturunabhängiger Gleichlauf von zwei oder mehr Hebern, insbesondere bei mehrstufigen, einfach wirkenden Teleskopzylindern erreicht.

Weiterhin können nunmehr unterschiedlich nivellierte Heberhöhen exakt ohne externe Rechenarbeit erfaßt werden. Durch den Einsatz der erfindungsgemäßen Vorrichtung zur Messung der Hubhöhe lassen sich nunmehr hoch genaue Meßergebnisse erzielen, welche nach dem bisherigen Stand der Technik für nicht möglich gehalten wurden.

Durch das Band-Zug-Konzept ist es möglich geworden alle Störgrößen, insbesondere der Übertragungselemente (Zahnfehler, Teilungsfehler, Längenänderung durch Dehnung usw.) über das Drehmoment oder durch Programmierung zu eliminieren, um so eine genaue Wegmessung zu erreichen.

Ein weiterer Vorteil der vorliegenden Erfindung ist der Einsatz der Absolutwertgebers am Übertragungselement. Mit diesem Gerät ist es möglich, z.B. nach einem Stromausfall ohne Referenzpunktanfahren weiter zu fahren.

Die Entwicklung der speziellen Höhenmessvorrichtung war weiterhin die Voraussetzung dafür, daß es nun möglich wird, ein hydraulisches Hubsystem, bestehend aus einfach wirkenden, mehrstufigen Hydraulikzylindern unterschiedlicher Größe im Gleichlauf zu fahren. Hierbei kann das System für Steuerungs-, Regel- und Positionieraufgaben bis zu einigen 1000 KN werden. Von besonderen Wichtigkeit ist hierbei die erreichbare Genauigkeit von weniger als 3 mm. Viskositätsänderungen (bewirken Längenänderung) im Hydraulikbetrieb sowie Druckunterschiede und Druckänderungen (Kompressibilität bewirkt ebenfalls eine Längenänderung) in den einzelnen Zylindern und Zylinderstufen haben auf die Gleichlauf-, Positionier- und Meßgenauigkeit so gut wie keinen Einfluß mehr.

## Patentansprüche

1. Vorrichtung zum last- und temperaturunabhängigen sowie positionsgenauen Hochbocken vorzugsweise von Flugzeugen unter Einhaltung einer vorgegebenen waagerechten oder geneigten Lage im Gleichlauf auf eine beliebig bestimmbare Höhe mittels vertikal stehender Hydraulikzylinder (42), die zusammen mit dem Hebergestell (15) die Hubelemente (31-33) bilden und insbesondere unter den Tragflächen (38) und dem Bug (39) des Flugzeuges ansetzbar sind,
**dadurch gekennzeichnet,** daß
a) an den Hubelementen (31-33) eine Vorrichtung (35,36) zur Messung der Hubhöhe angeordnet ist,
b) an der Vorrichtung (35,36) ein Meßwertgeber (9) angeordnet ist, mittels dessen die Länge des Hubweges wiedergegeben wird, und
c) die Vorrichtung (35,36) mit einer last- und temperaturunabhängigen, im automatischen Betrieb auf eine bestimmte Hubhöhe (41) sowie Hebe- und Senkgeschwindigkeit programmierbaren Steuereinheit (40) verbunden ist, an die die von dem Meßwertgeber (9) gegebenen Ist-Werte geleitet werden.

2. Vorrichtung nach Anspruch 1,
**dadurch gekennzeichnet,** daß die Vorrichtung (35,36) zur Messung der Hubhöhe (41) aus einem bandförmigen Element (5) besteht, das eine im Bereich unterhalb des unteren Endes des Hydraulikzylinders (42) angeordnete Auf-/Abwickelwelle (7) mit einer an der Kolbenstange (42a) angeordneten Verdrehsicherung (4) verbindet, so daß beim Anheben der Kolbenstange (42a) mit der Verdrehsicherung (4) das bandförmige Element (5) von der Auf-/Abwickelwelle (7) sich abwickelt und aufgrund der Länge des abgewickelten Bandes mittels des Meßwertgebers (9) die Hubhöhe (41) wiedergegeben wird.

3. Vorrichtung nach Anspruch 2,
**dadurch gekennzeichnet,** daß die Vorrichtung (35,36) zur Messung der Hubhöhe (41) in einem Gehäuse (1) angeordnet ist, das auf dem Boden zecks Messung der Hubhöhe (41) aufsetzbar ist.

4. Vorrichtung nach einem der Ansprüche 1 bis 3 bestehend aus einem Hebelgestell (15), in welchem mittig, vertikal stehend ein Hydraulikzylinder mit der Kolbenstange (42), der im oberen Bereich von drei winkelsymmetrisch zueinander angeordneten Stützen (43) und im unteren Bereich an mit einer Zentralplatte (44) verbundenen Abstützvorrichtungen (12-14) fixiert ist,
**dadurch gekennzeichnet,** daß ein mit dem Hebelgestell (15) fest verbundenes Trägerteil (2) zur Lagerung des Gehäuses (1) mit der Vorrichtung (35,36) zur Messung der Hubhöhe (41) an dem Hubelement (31-33) angeordnet ist.

5. Vorrichtung nach einem der Ansprüche 2 bis 4,
**dadurch gekennzeichnet,** daß das Gehäuse (1) in dem Trägerteil (2) vertikal verschiebbar gelagert ist.

6. Vorrichtung nach einem der Ansprüche 2 bis 5,
**dadurch gekennzeichnet,** daß an dem Trägerteil (2) ein Spannhebel (11) angeordnet ist, durch welchen das Gehäuse (1) in einer vorgegebenen Lage fixierbar ist.

7. Vorrichtung nach einem der Ansprüche 2 bis 6,
**dadurch gekennzeichnet,** daß die Verdrehsicherung (4) in einem Führungselement (45) vertikal beweglich angeordnet ist.

8. Vorrichtung nach einem der Ansprüche 2 bis 7,
**dadurch gekennzeichnet,** daß das bandförmige Element (5) von der Auf-/Abwickelwelle (7) zur Verdrehsicherung (4) formschlüssig über ein Übertragungselement (6), an dem der Messwertgeber (9) befestigt ist, geführt ist.

9. Vorrichtung nach einem der Ansprüche 2 bis 8,
**dadurch gekennzeichnet**, daß das bandförmige Element (5) mittels eines elektro-hydraulik- oder pneumatik Motors oder eines Federelementes (8) spannbar ist.
